# FASCICULE DE BREVET EUROPEEN

(11) **EP 3 555 022 B1**
(45) Date de publication et mention de la délivrance du brevet: **02.08.2023**
(21) Numéro de dépôt: 17816768.0
(22) Date de dépôt: 13.12.2017
(51) Int. Cl.: C04B 35/48, C03B 5/43, C04B 35/626, C04B 35/63, C04B 35/64, C04B 35/634

(54) **BETON FRITTE A BASE DE ZIRCON**
AUF ZIRKONDIOXID BASIERENDER SINTERBETON
ZIRCON-BASED SINTERED CONCRETE

(30) Priorité: 14.12.2016 FR 1662456
(43) Date de publication de la demande: 23.10.2019
(73) Titulaire: SAINT-GOBAIN CENTRE DE RECHERCHES ET D'ETUDES EUROPEEN, 92400 Courbevoie (FR)
(72) Inventeur: CHAMPION, Thibault, 84530 Villelaure (FR); BOBO, Michel, 84450 Saint Saturnin les Avignon (FR)
(74) Mandataire: Cabinet Nony
(86) Numéro de dépôt international: PCT/EP2017/082686
(87) Numéro de publication internationale: WO 2018/109037

(56) Documents cités:
- FR-A1- 2 929 941
- GB-A- 1 219 615
- US-A1- 2015 274 599

## Description

### Domaine technique

L'invention concerne un béton fritté à base de zircon destiné à être en contact avec du verre en fusion.

L'invention concerne également un procédé de fabrication d'un tel béton et des applications spécifiques d'un tel béton.

### Etat de la technique

Parmi les produits frittés, les bétons frittés à base de zircon, c'est-à-dire comportant plus de 70% en masse de zircon (silicate de zirconium : ZrO₂.SiO₂, ou ZrSiO₄), conviennent très bien à une utilisation au contact de verres en fusion borosilicate et opale.

La fabrication des bétons frittés doit cependant répondre à des contraintes de mise en oeuvre. En particulier la rhéologie du béton frais et son temps de prise doivent être adaptés pour qu'il puisse être mis en place au moyen de vibrations.

Par ailleurs, la formation de bulles a été observée lorsque ces bétons sont en contact avec du verre en fusion, comme décrit dans « Electrochemical mechanism of the oxygen bubble formation at the interface between oxidic melts and zirconium silicate refractories », Baucke et AI., Glastech. Ber.61 (1988) Nr. 5, 109-118. Ces bulles sont ensuite piégées dans le verre, donnant lieu à des défauts rédhibitoires.

Il existe donc un besoin pour un béton fritté induisant un phénomène de bullage réduit lorsqu'il est en contact avec un verre en fusion, notamment avec un verre borosilicate ou opale en fusion, et qui, à l'état frais, puisse être mis en place par vibrations.

La présente invention vise à satisfaire ce besoin.

### Résumé de l'invention

Plus particulièrement, l'invention concerne un béton fritté ayant la composition chimique moyenne suivante, en pourcentages en masse sur la base des oxydes et pour un total de 100% :
ZrO₂ : 55 à 70%,
SiO₂ : 25 à 40%,
P₂O₅ : 0,2 à 9,0%,
Al₂O₃ : 0,5 à 7,0%,
CaO : > 0,2 %,
CaO + MgO + B₂O₃ + Fe₂O₃ : 0,2 à 10,0%,
MgO + B₂O₃ + Fe₂O₃ : ≤ 7,5%,
B₂O₃ + MgO : ≤ 4,5%,
ZrO₂ + SiO₂ + P₂O₅ + Al₂O₃ + CaO + MgO + B₂O₃ + Fe₂O₃ : ≥ 95,0%,
et présentant plus de 70% de zircon, en pourcentage massique sur la base de la masse des phases cristallisées.

De manière surprenante, comme on le verra plus en détail dans la suite de la description, les inventeurs ont constaté que la composition et la microstructure d'un béton fritté selon l'invention conduisent à une réduction considérable du bullage, sans modifier substantiellement les conditions de fabrication.

Un béton fritté selon l'invention peut encore comporter une ou plusieurs des caractéristiques optionnelles et préférées suivantes :
- la teneur en ZrO₂ est supérieure à 57%, de préférence supérieure à 58%, de préférence supérieure à 59%, de préférence supérieure à 61%, et/ou inférieure à 67%, de préférence inférieure à 65%, de préférence inférieure à 64,5% ;
- la teneur en SiO₂ est supérieure à 26%, de préférence supérieure à 27%, de préférence supérieure à 28%, de préférence supérieure à 29%, et/ou inférieure à 37%, de préférence inférieure à 35%, de préférence inférieure à 33%, de préférence inférieure à 31% ;
- la teneur en P₂O₅ est supérieure à 0,3%, de préférence supérieure à 0,4%, de préférence supérieure à 0,5%, de préférence supérieure à 0,7%, de préférence supérieure à 0,9%, et/ou inférieure à 8,5%, de préférence inférieure à 8%, de préférence inférieure à 7,5%, de préférence inférieure à 7,0%, de préférence inférieure à 6,5%, de préférence inférieure à 5,5%, de préférence inférieure à 5,0%, de préférence inférieure à 4,0%, de préférence inférieure à 3,0%, de préférence inférieure à 2,8% ;
- la somme des teneurs en CaO, MgO, B₂O₃ et Fe₂O₃, CaO + MgO + B₂O₃ + Fe₂O₃ est supérieure à 0,3%, de préférence supérieure à 0,4%, de préférence supérieure à 0,5%, de préférence supérieure à 0,7%, et/ou inférieure à 9,5%, de préférence inférieure à 9,0%, de préférence inférieure à 8,1%, de préférence inférieure à 7,4%, de préférence inférieure à 6,6%, de préférence inférieure à 5,9%, de préférence inférieure à 5,1%, de préférence inférieure à 4,7% ;
- la teneur en CaO est supérieure à 0,3%, de préférence supérieure à 0,4%, de préférence supérieure à 0,5% et/ou inférieure à 7,9%, de préférence inférieure à 7,2%,
- de préférence inférieure à 6,5%, de préférence inférieure à 5,8%, de préférence inférieure à 5,0%, de préférence inférieure à 4,2%, de préférence inférieure à 3,7%, de préférence inférieure à 3,2% ;
- la teneur en Al₂O₃ est supérieure à 0,8%, de préférence supérieure à 1,0%, de préférence supérieure à 1,5%, et/ou inférieure à 6,5%, de préférence inférieure à 6,0%, de préférence inférieure à 5,5%, de préférence inférieure à 5,0%, de préférence inférieure à 4,5%, de préférence inférieure à 4,0% ;
- la somme des teneurs en MgO, B₂O₃ et Fe₂O₃, MgO + B₂O₃ + Fe₂O₃, est inférieure à 7,0%, de préférence inférieure à 6,5%, de préférence inférieure à 6,1%, de préférence inférieure à 5,7%, de préférence inférieure à 5,3%, de préférence inférieure à 4,8%, de préférence inférieure à 4,4%, de préférence inférieure à 3,9%, de préférence inférieure à 3,5%, de préférence inférieure à 3,0%, de préférence inférieure à 2,5%, de préférence inférieure à 2,1% ;
- la somme des teneurs en MgO et B₂O₃, MgO + B₂O₃, est inférieure à 4%, de préférence inférieure à 3,5%, de préférence inférieure à 3%, de préférence inférieure à 2,4%, de préférence inférieure à 1,9%, de préférence inférieure à 1,3% ;
- de préférence, la teneur en Na₂O est inférieure à 0,7%, de préférence inférieure à 0,5%, de préférence inférieure à 0,3%, de préférence inférieure à 0,1% ;
- la teneur en zircon, en masse sur la base des phases cristallisées est supérieure à 75%, de préférence supérieure à 80%, de préférence supérieure à 85%, voire supérieure à 90%, voire supérieure à 95% ;
- la zircone libre est l'une des autres phases cristallisées ;
- dans un mode de réalisation, les phases cristallisées sont, pour plus de 95%, de préférence plus de 98%, de préférence sensiblement 100% en masse, le zircon et la zircone libre ;
- la masse volumique apparente du béton fritté est supérieure à 3,30 g/cm³, de préférence supérieure à 3,40 g/cm³, de préférence supérieure à 3,50 g/cm³, de préférence supérieure à 3,60 g/cm³, et/ou inférieure à 3,90 g/cm³, de préférence inférieure à 3,80 g/cm³, de préférence inférieure à 3,70 g/cm³ ;
- la porosité ouverte du béton fritté est supérieure à 10%, de préférence supérieure à 15%, et/ou inférieure à 25%, de préférence inférieure à 20% ;
- le béton fritté présente la forme d'un bloc dont toutes les dimensions sont supérieures à 1 mm, supérieures à 5 mm, supérieures à 5 cm et dont toutes les dimensions sont de préférence inférieures à 150 cm ; Il présente de préférence une masse supérieure à 1 kg, supérieure à 5 kg, supérieure à 10 kg, voire supérieure à 100 kg.

Dans un **premier mode de réalisation préféré,** en particulier lorsque le seul phosphate présent dans la charge de départ est un phosphate de magnésium, de préférence Mg(PO₃)₂, le béton fritté a la composition chimique moyenne suivante, en pourcentages en masse sur la base des oxydes et pour un total de 100% :
ZrO₂ : 55 à 70%,
SiO₂ : 25 à 40%,
CaO : 0,2 à 3,0%,
Al₂O₃ : 0,5 à 7,0%,
MgO : 0,1 à 3,0%,
P₂O₅ : 0,3 à 9,0%,
autres oxydes : < 5,0%,
et présente plus de 70% de zircon, en pourcentage massique sur la base de la masse des phases cristallisées.
Notamment pour ce premier mode de réalisation préféré, un béton fritté peut comporter une ou plusieurs caractéristiques optionnelles et préférées suivantes :
- la teneur en CaO est inférieure à 2,5%, de préférence inférieure à 2,0%, de préférence inférieure à 1,5%, de préférence inférieure à 1,2% ;
- la teneur en MgO est supérieure à 0,3%, de préférence supérieure à 0,4%, et/ou inférieure à 2,8%, de préférence inférieure à 2,6%, de préférence inférieure à 2,4%, de préférence inférieure à 2,2%, de préférence inférieure à 2,1%, de préférence inférieure à 1,7%, de préférence inférieure à 1,3%, de préférence inférieure à 0,9% ;
- la teneur en « autres oxydes » est inférieure à 4,5%, de préférence inférieure à 4,0%, de préférence inférieure à 3,5%, de préférence inférieure à 3,0%, de préférence inférieure à 2,5%, de préférence inférieure à 2%, de préférence inférieure à 1,5% ;
- la teneur en Fe₂O₃ est inférieure à 1%, de préférence inférieure à 0,7%, de préférence inférieure à 0,5%, de préférence inférieure à 0,3%, de préférence inférieure à 0,15% ;

Dans un **deuxième mode de réalisation,** en particulier lorsque le seul phosphate présent dans la charge de départ est un phosphate de fer, de préférence FePO₄ ;
- la teneur en P₂O₅ est supérieure à 0,3%, de préférence supérieure à 0,4%, de préférence supérieure à 0,5%, de préférence supérieure à 0,7%, et inférieure 5,8%, de préférence inférieure à 5,1%, de préférence inférieure à 4,5%, de préférence inférieure à 3,5%, de préférence inférieure à 3,0%, de préférence inférieure à 2,3%, de préférence inférieure à 1,9%, et
- la teneur en Fe₂O₃ est supérieure à 0,1%, de préférence supérieure à 0,2%, de préférence supérieure à 0,5%, de préférence supérieure à 0,7%, et inférieure 6,5%, de préférence inférieure à 6,0%, de préférence inférieure à 5,5%, de préférence inférieure à 5,0%, de préférence inférieure à 4,5%, de préférence inférieure à 4,0%, de préférence inférieure à 3,5%, de préférence inférieure à 3,0%, de préférence inférieure à 2,5%, de préférence inférieure à 2,0%, et
- la teneur en MgO est inférieure à 0,5%, de préférence inférieure à 0,3%, de préférence inférieure à 0,15%, et
- la teneur en B₂O₃ est inférieure à 0,5%, de préférence inférieure à 0,3%, de préférence inférieure à 0,15%, et
- la teneur en CaO est supérieure à 0,3%, de préférence supérieure à 0,4%, de préférence supérieure à 0,5%, et inférieure à 3%, de préférence inférieure à 2,5%, de préférence inférieure à 2,0%, de préférence inférieure à 1,5%, de préférence inférieure à 1,2% ;
- la somme des teneurs en MgO et B₂O₃, MgO + B₂O₃, est inférieure à 1%, de préférence inférieure à 0,6%, de préférence inférieure à 0,3%, de préférence inférieure à 0,2%, de préférence inférieure à 0,1%, et
- la somme des teneurs en CaO, MgO, B₂O₃ et Fe₂O₃, CaO + MgO + B₂O₃ + Fe₂O₃, est supérieure à 0,3%, de préférence supérieure à 0,4%, de préférence supérieure à 0,5%, de préférence supérieure à 0,7%, de préférence supérieure à 1,0%, de préférence supérieure à 1,2%, et inférieure à 10%, de préférence inférieure à 9,5%, de préférence inférieure à 9,0%, de préférence inférieure à 8,1%, de préférence inférieure à 7,4%, de préférence inférieure à 6,6%, de préférence inférieure à 5,9%, de préférence inférieure à 5,1%, de préférence inférieure à 4,7%, de préférence inférieure à 4,2%, de préférence inférieure à 3,5%, et
- la somme des teneurs en MgO, B₂O₃ et Fe₂O₃, MgO + B₂O₃ + Fe₂O₃, est supérieure à 0,1%, de préférence supérieure à 0,2%, de préférence supérieure à 0,5%, de préférence supérieure à 0,7%, et inférieure à 7,0%, de préférence inférieure à 6,5%, de préférence inférieure à 6,1%, de préférence inférieure à 5,7%, de préférence inférieure à 5,3%, de préférence inférieure à 4,8%, de préférence inférieure à 4,4%, de préférence inférieure à 3,9%, de préférence inférieure à 3,5%, de préférence inférieure à 3,0%, de préférence inférieure à 2,3%.

Dans un **troisième mode de réalisation,** en particulier lorsque le seul phosphate présent dans la charge de départ est le phosphate de bore BPO₄,
- la teneur en P₂O₅ est supérieure à 0,25%, de préférence supérieure à 0,4%, de préférence supérieure à 0,7%, de préférence supérieure à 1,0%, et inférieure 8,3%, de préférence inférieure à 7,5%, de préférence inférieure à 6,5%, de préférence inférieure à 5,5%, de préférence inférieure à 4,5%, de préférence inférieure à 3,5%, de préférence inférieure à 2,7%, et
- la teneur en B₂O₃ est supérieure à 0,05%, de préférence supérieure à 0,1%, de préférence supérieure à 0,2%, de préférence supérieure à 0,3%, de préférence supérieure à 0,4%, et inférieure 4,0%, de préférence inférieure à 3,5%, de préférence inférieure à 3,0%, de préférence inférieure à 2,5%, de préférence inférieure à 2,0%, de préférence inférieure à 1,6%, de préférence inférieure à 1,3%, et
- la teneur en MgO est inférieure à 0,5%, de préférence inférieure à 0,3%, de préférence inférieure à 0,15%, et
- la teneur en Fe₂O₃ est inférieure à 0,5%, de préférence inférieure à 0,3%, de préférence inférieure à 0,15%, et
- la teneur en CaO est supérieure à 0,3%, de préférence supérieure à 0,4%, de préférence supérieure à 0,5%, et inférieure à 3%, de préférence inférieure à 2,5%, de préférence inférieure à 2,0%, de préférence inférieure à 1,5%, de préférence inférieure à 1,2%, et
- la somme des teneurs en CaO, MgO, B₂O₃ et Fe₂O₃, CaO + MgO + B₂O₃ + Fe₂O₃, est supérieure à 0,3%, de préférence supérieure à 0,4%, de préférence supérieure à 0,5%, de préférence supérieure à 0,7%, de préférence supérieure à 0,9%, et inférieure à 8,0%, de préférence inférieure à 7,4%, de préférence inférieure à 6,6%, de préférence inférieure à 5,9%, de préférence inférieure à 5,1%, de préférence inférieure à 4,7%, de préférence inférieure à 4,2%, de préférence inférieure à 3,5%, de préférence inférieure à 2,8%, et
- la somme des teneurs en MgO, B₂O₃ et Fe₂O₃, MgO + B₂O₃ + Fe₂O₃, est supérieure à 0,05%, de préférence supérieure à 0,1%, de préférence supérieure à 0,2%, de préférence supérieure à 0,3%, de préférence supérieure à 0,4%, et inférieure à 5,0%, de préférence inférieure à 4,8%, de préférence inférieure à 4,4%, de préférence inférieure à 3,9%, de préférence inférieure à 3,5%, de préférence inférieure à 3,0%, de préférence inférieure à 2,3%, de préférence inférieure à 1,6%, et
- la somme des teneurs en MgO et B₂O₃, MgO + B₂O₃, est supérieure à 0,05%, de préférence supérieure à 0,1%, de préférence supérieure à 0,2%, de préférence supérieure à 0,3%, de préférence supérieure à 0,4% et inférieure à 4,5%, de préférence inférieure à 3,9%, de préférence inférieure à 3,5%, de préférence inférieure à 3,0%, de préférence inférieure à 2,3%, de préférence inférieure à 1,5%.

Dans un **quatrième mode de réalisation,** en particulier lorsque le seul phosphate présent dans la charge de départ est un phosphate de calcium, de préférence Ca₂P₂O₇,
- la teneur en P₂O₅ est supérieure à 0,25%, de préférence supérieure à 0,4%, de préférence supérieure à 0,7%, de préférence supérieure à 0,9% et inférieure 7,0%, de préférence inférieure à 6,5%, de préférence inférieure à 6,0%, de préférence inférieure à 5,5%, de préférence inférieure à 5,0%, de préférence inférieure à 4,5%, de préférence inférieure à 4,0%, de préférence inférieure à 3,5%, de préférence inférieure à 3,0%, de préférence inférieure à 2,5%, et
- la teneur en CaO est supérieure à 0,3%, de préférence supérieure à 0,5%, de préférence supérieure à 0,8%, de préférence supérieure à 1,1%, et inférieure à 8,4%, de préférence inférieure à 7,8%, de préférence inférieure à 7,0%, de préférence inférieure à 6,5%, de préférence inférieure à 6,0%, de préférence inférieure à 5,5%, de préférence inférieure à 5,0%, de préférence inférieure à 4,5%, de préférence inférieure à 4,0%, de préférence inférieure à 3,5%, de préférence inférieure à 2,9%, et
- la teneur en B₂O₃ est inférieure à 0,5%, de préférence inférieure à 0,3%, de préférence inférieure à 0,15%, et
- la teneur en MgO est inférieure à 0,5%, de préférence inférieure à 0,3%, de préférence inférieure à 0,15%, et
- la teneur en Fe₂O₃ est inférieure à 0,5%, de préférence inférieure à 0,3%, de préférence inférieure à 0,15%, et
- la somme des teneurs en CaO, MgO, B₂O₃ et Fe₂O₃, CaO + MgO + B₂O₃ + Fe₂O₃, est supérieure à 0,3%, de préférence supérieure à 0,4%, de préférence supérieure à 0,5%, de préférence supérieure à 0,7%, de préférence supérieure à 0,9%, de préférence supérieure à 1,1%, et inférieure à 9,5%, de préférence inférieure à 9,0%, de préférence inférieure à 8,5%, de préférence inférieure à 8,0%, de préférence inférieure à 7,5%, de préférence inférieure à 7,0%, de préférence inférieure à 6,5%, de préférence inférieure à 6,0%, de préférence inférieure à 5,5%, de préférence inférieure à 5,0%, de préférence inférieure à 4,5%, de préférence inférieure à 4,0%, de préférence inférieure à 3,4%, et
- la somme des teneurs en MgO, B₂O₃ et Fe₂O₃, MgO + B₂O₃ + Fe₂O₃, est inférieure à 1,5%, de préférence inférieure à 1,0%, de préférence inférieure à 0,5%, de préférence inférieure à 0,3%, et
- la somme des teneurs en MgO et B₂O₃, MgO + B₂O₃, est inférieure à 1,0%, de préférence inférieure à 0,5%, de préférence inférieure à 0,3%.

Dans un **cinquième mode de réalisation,** en particulier lorsque le seul phosphate présent dans la charge de départ est un phosphate d'aluminium, de préférence AlPO₄
- la teneur en P₂O₅ est supérieure à 0,25%, de préférence supérieure à 0,35%, de préférence supérieure à 0,6%, de préférence supérieure à 0,9%, et inférieure 2,4%, et
- la teneur en Al₂O₃ est supérieure à 0,8%, de préférence supérieure à 1,0%, de préférence supérieure à 1,5%, de préférence supérieure à 2,0%, de préférence supérieure à 2,5%, et inférieure à 6,5%, de préférence inférieure à 6,0%, de préférence inférieure à 5,5%, et
- la teneur en B₂O₃ est inférieure à 0,5%, de préférence inférieure à 0,3%, de préférence inférieure à 0,15%, et
- la teneur en MgO est inférieure à 0,5%, de préférence inférieure à 0,3%, de préférence inférieure à 0,15%, et
- la teneur en Fe₂O₃ est inférieure à 0,5%, de préférence inférieure à 0,3%, de préférence inférieure à 0,15%, et
- la teneur en CaO est supérieure à 0,3%, de préférence supérieure à 0,4%, de préférence supérieure à 0,5%, et inférieure à 3%, de préférence inférieure à 2,5%, de préférence inférieure à 2,0%, de préférence inférieure à 1,5%, de préférence inférieure à 1,2%, et
- la somme des teneurs en CaO, MgO, B₂O₃ et Fe₂O₃, CaO + MgO + B₂O₃ + Fe₂O₃, est supérieure à 0,2%, de préférence supérieure à 0,3%, de préférence supérieure à 0,4%, de préférence supérieure à 0,5% et inférieure à 4,5%, de préférence inférieure à 4,0%, de préférence inférieure à 3,5%, de préférence inférieure à 3,0%, de préférence inférieure à 2,5%, de préférence inférieure à 2,0%, de préférence inférieure à 1,7%, et
- la somme des teneurs en MgO, B₂O₃ et Fe₂O₃, MgO + B₂O₃ + Fe₂O₃, est inférieure à 1,5%, de préférence inférieure à 1,0%, de préférence inférieure à 0,5%, de préférence inférieure à 0,3%, et
- la somme des teneurs en MgO et B₂O₃, MgO + B₂O₃, est inférieure à 1,0%, de préférence inférieure à 0,5%, de préférence inférieure à 0,3%.

L'invention concerne aussi un procédé de fabrication d'un béton fritté selon l'invention, comprenant les étapes successives suivantes :
a) mélange de matières premières particulaires pour former une charge de départ,
b) activation de ladite charge de départ de manière à obtenir un béton frais,
c) mise en forme dudit béton frais,
d) durcissement dudit béton frais de manière à obtenir un béton durci,
e) frittage dudit béton durci de manière à obtenir ledit béton fritté,
la composition de la charge de départ étant adaptée de manière que le béton fritté obtenu après l'étape e) soit conforme à l'invention.

L'adaptation de la charge de départ ne pose aucune difficulté à l'homme du métier.

La charge de départ comporte entre 1,0% et 6,0% en poids d'un liant hydraulique, de préférence d'un ciment, et plus de 0,25% d'un phosphate choisi parmi les phosphates de magnésium, les phosphates de fer, les phosphates de bore, les phosphates de calcium, les phosphates d'aluminium et leurs mélanges, ledit phosphate apportant plus de 50% du phosphore de la charge de départ.

De manière surprenante, les inventeurs ont constaté cette combinaison de liant hydraulique et dudit phosphate, de préférence du phosphate de magnésium, améliore sensiblement les possibilités de mettre en forme le béton frais, notamment sous vibrations.

De préférence, le procédé selon l'invention présente encore une ou plusieurs des caractéristiques optionnelles suivantes :
- dans la charge de départ, la quantité massique de particules de zircon, c'est-à-dire de particules comportant plus de 90%, de préférence plus de 95% en masse de zircon sur la base de la masse des phases cristallisées desdites particules, est supérieure à 70%, de préférence supérieure à 73%, de préférence supérieure à 75%, de préférence supérieure à 78%, de préférence supérieure à 80%, et/ou inférieure ou égale à 95%, de préférence inférieure ou égale à 90% de la masse de la charge de départ ;
- dans la charge de départ, la quantité massique de particules de zircone libre, c'est-à-dire de particules comportant plus de 90%, de préférence plus de 95% en masse de zircone non associée à de la silice dans une phase de zircon, sur la base de la masse des phases cristallisées desdites particules, est supérieure à 1,0%, de préférence supérieure à 3,0%, de préférence supérieure à 5,0%, de préférence supérieure à 6,0%, et/ou inférieure à 20,0%, de préférence inférieure à 15,0%, de préférence inférieure à 12,0% ;
- la quantité de liant hydraulique dans la charge de départ est supérieure à 1,5%, de préférence supérieure à 2,0%, et/ou inférieure à 5,5%, de préférence inférieure à 5,0%, de préférence inférieure à 4,0% de la masse de la charge de départ ;
- le liant hydraulique est un ciment, de préférence un ciment alumineux, de préférence un ciment d'aluminate(s) de calcium ;
- la teneur en alumine du liant hydraulique est de préférence comprise entre 50% et 85% ;
- la charge de départ est constituée, pour plus de 90%, de préférence pour plus de 92%, de préférence pour plus de 95%, de préférence pour plus de 97%, de préférence pour plus de 98% de sa masse, de particules de zircon, de particules de liant hydraulique, de particules dudit phosphate choisi parmi les phosphates de magnésium, les phosphates de fer, les phosphates de bore, les phosphates de calcium, les phosphates d'aluminium et leurs mélanges, de préférence de phosphate de magnésium, de particules de fumée de silice, de particules de zircone et de particules d'additif de mise en forme ;
- la charge de départ comporte du phosphate de magnésium Mg(PO₃)₂.nH₂O avec n ≥ 0 et/ou du phosphate de fer FePO₄.nH₂O avec n ≥ 0 et/ou du phosphate de bore BPO₄. nH₂O avec n ≥ 0 et/ou du phosphate de calcium Ca₂P₂O₇.nH₂O avec n ≥ 0 et/ou du phosphate d'aluminium AlPO₄.nH₂O avec n ≥ 0. De préférence, la charge de départ comporte du phosphate de magnésium Mg(PO₃)₂.nH₂O avec n ≥ 0 :
- dans un mode de réalisation, la quantité massique du phosphate choisi parmi les phosphates de magnésium, les phosphates de fer, les phosphates de bore, les phosphates de calcium, les phosphates d'aluminium et leurs mélanges, en particulier de phosphate de magnésium, de préférence Mg(H₂PO₄)₂, MgHPO₄, Mg₃(PO₄)₂, Mg(PO₃)₂, Mg₂P₂O₇ et leurs mélanges, lesdits composés pouvant éventuellement incorporer des molécules d'eau, comme par exemple Mg₃(PO₄)₂.nH₂O avec n ≥ 0 dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0%. Avantageusement, le comportement au fluage à hautes températures en est amélioré ;
- dans un mode de réalisation préféré, le seul phosphate présent dans la charge de départ est Mg(PO₃)₂.nH₂O avec n ≥ 0, et la quantité massique de Mg(PO₃)₂.nH₂O dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0% ;
- dans un mode de réalisation, la quantité massique de phosphate de fer dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0% ;
- dans un mode de réalisation, le seul phosphate présent dans la charge de départ est un phosphate de fer, de préférence FePO₄.nH₂O avec n ≥ 0, et la quantité massique de phosphate de fer dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0% ;
- dans un mode de réalisation, la quantité massique de phosphate de bore dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0% ;
- dans un mode de réalisation, le seul phosphate présent dans la charge de départ est un phosphate de bore, de préférence BPO₄.nH₂O avec n ≥ 0, et la quantité massique de phosphate de bore dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0% ;
- dans un mode de réalisation, la quantité massique de phosphate de calcium dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0% ; dans un mode de réalisation, le seul phosphate présent dans la charge de départ est un phosphate de calcium, de préférence Ca₂P₂O₇.nH₂O avec n ≥ 0, et la quantité massique de phosphate de calcium dans la charge de départ est supérieure à 0,3%, de préférence supérieure à 0,5%, de préférence supérieure à 1,0%, voire supérieure à 1,5%, et/ou inférieure à 14,0%, de préférence inférieure à 13,0%, de préférence inférieure à 12,0%, de préférence inférieure à 11,0%, de préférence inférieure à 10,0%, de préférence inférieure à 9,0%, de préférence inférieure à 8,0%, de préférence inférieure à 7,0%, de préférence inférieure à 6,0%, de préférence inférieure à 5,0%, de préférence inférieure à 4,0% ;
- dans un mode de réalisation, la quantité massique de phosphate d'aluminium dans la charge de départ est supérieure à 0,3%, de préférence supérieure à 0,5%, de préférence supérieure à 1,0%, voire supérieure à 1,5%, et/ou inférieure à 4,0% ;
- dans un mode de réalisation, le seul phosphate présent dans la charge de départ est un phosphate d'aluminium, de préférence AlPO₄.nH₂O avec n ≥ 0 et la quantité massique de phosphate d'aluminium dans la charge de départ est supérieure à 0,3%, de préférence supérieure à 0,5%, de préférence supérieure à 1,0%, voire supérieure à 1,5% et/ou inférieure à 4,0% ;
- dans un mode de réalisation préféré, le percentile 99,5, D_{99,5} de la charge de départ est inférieur à 15 mm, de préférence inférieure à 10 mm, de préférence inférieur à 8 mm, de préférence inférieur à 5 mm, voire inférieur à 4mm, voire inférieure à 3 mm et de préférence supérieur à 0,4 mm, de préférence supérieure à 1 mm, voire supérieur à 2 mm.

L'invention concerne enfin une unité de production de verre, en particulier un four de verrerie, comportant une pièce comportant ou constitué en un béton fritté selon l'invention, de préférence fabriqué selon le procédé selon l'invention.

En particulier et sans que cela ne limite l'invention, ladite pièce peut être :
- une brique à nez,
- une dalle de sole,
- une pièce de superstructure,
- un bloc canal d'un canal d'alimentation,
- un bloc brûleur,
- un consommable, par exemple une chemise, un plongeur, un agitateur, un rotor, une rondelle d'écoulement, une cuvette d'avant-corps,
- un mandrin utilisé dans une fabrication de tubes en verre selon le procédé Dänner,
- un bloc porte-électrode.

### Définitions

- Par « charge de départ » ou « béton non façonné », on entend un mélange particulaire comportant un liant hydraulique apte à prendre en masse après activation.
- L'activation est un processus de prise en masse. L'état activé résulte classiquement d'une humidification d'un béton non façonné avec de l'eau ou un autre liquide. Pendant ce processus, un béton non façonné humide est appelé « béton frais ».
- La masse solide obtenue par la prise en masse d'un béton frais est appelée « béton durci ». Un béton durci est classiquement constitué d'un ensemble de grains grossiers présentant une taille comprise entre 150 µm et 25 mm liées par une matrice, ladite matrice assurant une structure continue entre les grains grossiers, obtenue, après activation, lors de la prise en masse de la charge de départ. Après frittage, le béton durci est appelé « béton fritté ».
- Par « liant hydraulique », on entend un liant qui, lors de l'activation, génère une prise et un durcissement hydraulique, généralement à température ambiante. Un ciment est un liant hydraulique. Un ciment alumineux est un exemple de ciment. Un ciment d'aluminate(s) de calcium est un exemple de ciment alumineux.
- La « taille » des particules est évaluée classiquement par une caractérisation de distribution granulométrique réalisée avec un granulomètre laser pour la fraction des particules passant à travers un tamis à mailles carrées d'ouverture égale à 150 µm et, pour le refus audit tamis, par tamisage à l'aide de tamis à mailles carrées. Le granulomètre laser peut être, par exemple, un Partica LA-950 de la société HORIBA.
- Les percentiles ou « centiles » 50 (D₅₀) et 99,5 (D_{99,5}) sont les tailles de particules d'une poudre correspondant aux pourcentages en masse de 50 % et de 99,5 % respectivement, sur la courbe de distribution granulométrique cumulée des tailles des particules de la poudre, les tailles des particules étant classées par ordre croissant. Par exemple, 99,5%, en masse des particules de la poudre ont une taille inférieure à D_{99,5} et 50% des particules en masse ont une taille supérieure ou égale à D₅₀. Les percentiles peuvent être déterminés à l'aide d'une distribution granulométrique réalisée à l'aide d'un granulomètre laser et/ou de tamisages.
- On appelle « taille médiane » le percentile 50 (D₅₀).
- On appelle « taille maximale » le percentile 99,5 (D_{99,5}).
- Par « phosphate de l'élément A », on entend un composé électriquement neutre de formule AₐP_{P}HₕOₒ(OH)_{y}(H₂O)ₙ, a, p et o étant des nombres entiers > 0, h, y et n étant des nombres entiers ≥ 0, et 3 ≤ olp ≤ 4. FePO₄ est un exemple de phosphate de fer, BPO₄ est un exemple de phosphate de fer, Ca₂P₂O₇ est un exemple de phosphate de calcium, Mg(PO₃)₂ est un exemple de phosphate de magnésium et AlPO₄ est un exemple de phosphate d'aluminium.
- Lorsqu'il est fait référence à ZrO₂, il y a lieu de comprendre ZrO₂ et les traces de HfO₂. Les traces de HfO₂ sont typiquement inférieures à 2% de la masse de l'ensemble ZrO₂ + HfO₂. Ces traces toujours naturellement présentes dans les sources de zircone libre ou de zircon. L'oxyde d'hafnium n'est donc pas considéré comme un « autre oxyde ».

Tous les pourcentages de la présente description sont des pourcentages en masse, sauf mention contraire. Les pourcentages relatifs à la composition sont sur la base des oxydes, sauf indication contraire.

La somme des teneurs des constituants d'un béton fritté selon l'invention est de 100%. Les teneurs ne peuvent donc prendre des valeurs dans les plages revendiquées que dans la mesure où cette contrainte est respectée. Par exemple, toutes les limites supérieures ou inférieures des plages des constituants d'un béton fritté selon l'invention ne peuvent être atteintes simultanément.

Les verbes « comporter », « présenter » ou « comprendre » doivent être interprétés de manière large, non limitative, sauf indication contraire. Par exemple, si « la charge de départ comporte du phosphate de magnésium Mg(PO₃)₂ », cela n'exclut pas la présence d'un autre phosphate de magnésium.

### Brève description des figures

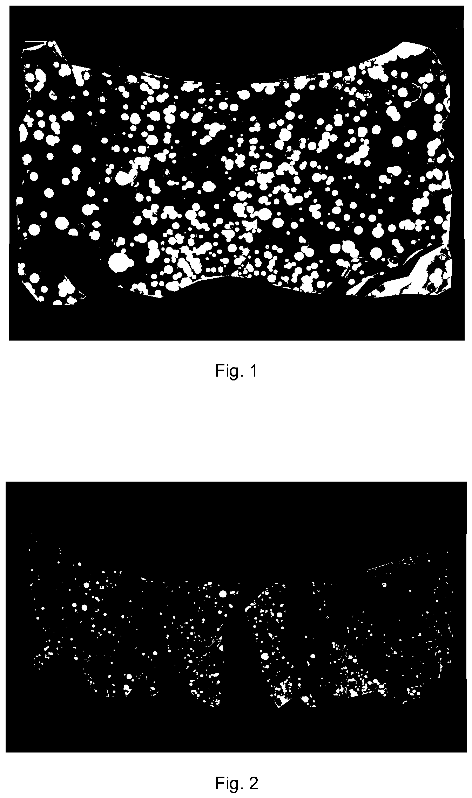

D'autres caractéristiques et avantages de l'invention apparaîtront encore à la lecture de la description détaillée qui va suivre et à l'examen du dessin détaillé dans lequel les figures 1 et 2 représentent des photographies des surfaces de verre observées des exemples 1, hors invention, et 3, selon l'invention, respectivement.

Les photographies ont été réalisées avec le même grossissement.

### Description détaillée

Des étapes similaires à celles d'un procédé conventionnel de fabrication d'un béton fritté destiné à des applications dans des fours de fusion de verre peuvent être mises en oeuvre.

En particulier, un béton selon l'invention peut être fabriqué suivant les étapes a) à c) décrites ci-dessus.

**A l'étape a),** une charge de départ particulaire sèche est préparée en fonction de la composition et de la porosité souhaitées.

### Composition

La façon de déterminer les proportions des constituants de la charge de départ est parfaitement connue de l'homme du métier. En particulier, l'homme du métier sait que le zirconium, le silicium, le calcium, l'aluminium, le magnésium, le fer, le bore et le phosphore présents dans la charge de départ se retrouvent dans le béton fritté. Il sait également déterminer quels constituants vont se transformer pour constituer la matrice. La charge de départ comporte de préférence plus de 0,25%, de préférence plus 0,5%, de préférence plus de 1% d'un phosphate choisi parmi les phosphates de magnésium, les phosphates de fer, les phosphates de bore, les phosphates de calcium, les phosphates d'aluminium et leurs mélanges, de préférence un phosphate de magnésium, de préférence Mg(H₂PO₄)₂, MgHPO₄, Mg₃(PO₄)₂, Mg(PO₃)₂, Mg₂P₂O₇ et leurs mélanges, lesdits composés pouvant éventuellement incorporer des molécules d'eau, de préférence Mg(PO₃)₂, ledit phosphate apportant plus de 50%, de préférence plus de 60%, de préférence plus de 70%, de préférence plus de 80%, du phosphore de la charge de départ. De manière surprenante, et comme démontré par les exemples ci-dessous, les inventeurs ont découvert que l'association de magnésium et/ou de fer et/ou d'aluminium et/ou de bore et/ou de calcium au phosphore sous la forme d'un phosphate de magnésium et/ou d'un phosphate de fer et/ou d'un phosphate d'aluminium et/ou d'un phosphate de bore et/ou d'un phosphate de calcium améliore sensiblement les possibilités de mettre en forme le béton frais, notamment sous vibrations, tout en limitant le bullage du béton fritté lorsqu'il est en contact avec du verre en fusion.

De préférence, la charge de départ est constituée de particules de zircon, de liant hydraulique, de préférence d'un ciment, de phosphate de magnésium, et/ou de phosphate de fer et/ou de phosphate d'aluminium et/ou de phosphate de bore et/ou de phosphate de calcium, de fumée de silice, de zircone et d'additif de mise en forme.

De préférence, plus de 70%, plus de 80% du zirconium, exprimé sous la forme de zircone ZrO₂, en pourcentage massique, est apporté sous forme de zircon, le reste étant apporté sous forme de zircone libre.

De préférence, la charge de départ comporte au plus 5% de silice libre, c'est-à-dire non associée, comme par exemple dans du zircon. De préférence, la silice libre est de la fumée de silice. De préférence, la fumée de silice contient plus de 93% de silice (SiO₂), la poudre de fumée de silice présentant une taille médiane comprise entre 0,1 et 0,8 µm, de préférence entre 0,2 et 0,7 µm.

Le liant hydraulique est un ciment, de préférence un ciment alumineux, de préférence un ciment d'aluminate(s) de calcium.

De préférence, plus de 60%, plus de 65%, plus de 70% de l'aluminium, exprimé sous la forme d'alumine Al₂O₃, en pourcentage massique, est apporté sous forme d'un liant hydraulique, de préférence sous la forme d'un ciment alumineux, de préférence sous la forme d'un ciment d'aluminate(s) de calcium.

Dans un mode de réalisation préféré, les oxydes autres que ZrO₂, SiO₂, CaO, Al₂O₃, MgO, Fe₂O₃, B₂O₃ et P₂O₅, de préférence les oxydes autres que ZrO₂, SiO₂, CaO, Al₂O₃, MgO et P₂O₅ sont des impuretés, c'est-à-dire des constituants inévitables, introduits nécessairement avec les matières premières. A titre d'exemples, on peut citer Na₂O.

De préférence, la teneur en Na₂O est inférieure à 0,7%, de préférence inférieure à 0,5%, de préférence inférieure à 0,3%, de préférence inférieure à 0,1%.

La charge de départ contient de préférence un additif de mise en forme, de préférence temporaire (c'est-à-dire éliminé lors du frittage), de préférence en une quantité massique inférieure à 3,0%, de préférence inférieure à 2,0%, de préférence inférieure à 1,0%, de préférence inférieure à 0,5% et de préférence supérieure à 0,05%, de préférence supérieure à 0,1%.

De préférence, l'additif de mise en forme est choisi parmi
les plastifiants, comme le polyéthylène glycol (PEG) ou l'alcool polyvinylique (APV),
les liants temporaires organiques tels que les résines, les lignosulfonates, la dextrine, les alginates,
les défloculants, tels que les polyphosphates de métaux alcalins, les polyacrylates de métaux alcalins, les polycarboxylates, et
les mélanges de ces produits.

Dans un mode de réalisation, la charge de départ comporte des fibres, de préférence organiques, de préférence du type vinylique ou polypropylène, de préférence en une quantité massique comprise entre 0,01% et 0,1%, de préférence en une quantité massique comprise entre 0,01% et 0,03%. De préférence la longueur moyenne (moyenne arithmétique) de ces fibres est supérieure à 6 mm, de préférence comprise entre 18 et 24 mm. Ces fibres facilitent avantageusement l'évacuation de l'eau pendant le séchage.

Dans un autre mode de réalisation, la charge de départ ne comporte pas de fibres.

### Distribution granulométrique

De préférence, la taille maximale des particules de la charge de départ est inférieure ou égale à 15 mm, de préférence inférieure ou égale à 10 mm, de préférence inférieure ou égale à 8 mm, de préférence inférieure ou égale à 5 mm, voire inférieur à 4 mm, voire inférieure à 3 mm et de préférence supérieure à 0,4 mm, de préférence supérieure à 1 mm, voire supérieure à 2 mm.

De préférence, plus de 30%, plus de 35%, voire plus de 45% des particules de zircon sont des particules de granulat, c'est-à-dire présentant une taille comprise entre 150 µm et 15 mm.

De préférence, plus de 45%, plus de 50% et moins de 70%, moins de 65% des particules de zircon sont des particules fines, c'est-à-dire présentant une taille inférieure à 150 µm.

De préférence, plus de 90%, plus de 95%, voire 100% des particules comportant plus de 15% en masse de CaO et/ou des particules comportant plus de 40% en masse de Al₂O₃ et/ou des particules comportant plus de 15% en masse de MgO et/ou des particules comportant plus de 50% en masse de P₂O₅ et/ou des particules comportant plus de 40% en masse de Fe₂O₃ et/ou des particules comportant plus de 30% en masse de B₂O₃ sont des particules fines, c'est-à-dire présentant une taille inférieure à 150 µm.

De préférence, la poudre des particules de zircone (apportant la zircone libre) présente une taille médiane inférieure à 10 µm, de préférence inférieure à 8 µm, de préférence inférieure à 5 µm, et/ou supérieure à 1 µm, de préférence supérieure à 2 µm.

Les modèles de compaction d'Andréasen ou de Fuller-Bolomey peuvent être utilisés pour adapter la distribution granulométrique de la charge de départ à la porosité souhaitée. De tels modèles de compaction sont notamment décrits dans l'ouvrage intitulé « Traité de céramiques et matériaux minéraux », C.A. Jouenne, Editions Septima. Paris (1984), pages 403 à 405.

**A l'étape b),** de préférence après avoir malaxé à sec suffisamment pour obtenir un mélange homogène, de l'eau est classiquement ajoutée à la charge de départ. De préférence, on ajoute au moins 3 % et moins de 8 %, de préférence moins de 7 % d'eau, en pourcentages en masse par rapport à la masse minérale de la charge de départ, hormis l'eau. La quantité d'eau est fonction de la technologie utilisée à l'étape c). Par exemple pour une étape c) réalisée à l'aide d'un coulage sous vibrations, un ajout d'une quantité d'eau comprise entre 3% et 6%, en pourcentage massique sur la base de la charge de départ, est préféré.

L'eau est de préférence ajoutée progressivement dans le malaxeur en fonctionnement jusqu'à obtention d'un mélange humide sensiblement homogène. L'ajout d'eau provoque l'activation de la charge de départ, c'est-à-dire engage son processus de prise en masse.

**A l'étape c),** le béton frais obtenu à l'étape b) peut être versé dans un moule, afin d'être mis en forme, de manière à former une pièce crue.

De préférence, le moule est conformé de manière que le béton fritté obtenu se présente sous la forme d'un bloc présentant une masse supérieure à 5 kg, de préférence à 10 kg. De tels blocs sont bien adaptés aux applications visées.

La mise en forme peut résulter d'un coulage, d'un vibro-coulage, d'un vibro-compactage, d'un pressage ou d'une combinaison de ces techniques, de préférence d'un coulage, d'un vibro-coulage ou d'une combinaison de ces techniques.

**A l'étape d),** le béton frais prend en masse de manière à obtenir un béton durci. Le béton durci peut subir une étape de séchage, afin d'éliminer une partie de l'eau ayant été utilisée pour la mise en forme. Une telle étape est parfaitement connue de l'homme du métier.

**A l'étape e),** le béton durci est fritté à une température de préférence comprise entre 900°C et 1600°C, de préférence entre 1300°C et 1600°C, de préférence sous air, de préférence à pression atmosphérique. La durée de frittage est adaptée en fonction des dimensions du béton durci à fritter. La durée du palier de frittage est généralement comprise entre 1 et 20 heures, de préférence entre 5 à 10 heures. Dans les applications où, dans sa position de service, le béton durci peut être soumis à des conditions de chauffage susceptibles de le fritter, le béton durci est de préférence mis en position sans avoir été fritté, puis fritté *in situ.*

A l'issue de l'étape e), on obtient un béton fritté selon l'invention.

De préférence, les oxydes représentent plus de 98,5%, plus de 99%, voire sensiblement 100% de la masse d'un béton fritté selon l'invention.

### Exemples

Les exemples non limitatifs suivants sont donnés dans le but d'illustrer l'invention.

Dans ces exemples, les matières premières employées suivantes ont été choisies, les pourcentages donnés étant des pourcentages massiques :
- un granulat de zircon présentant l'analyse chimique suivante, en pourcentages massiques : ZrO₂ : 66%, SiO₂ : 33%, Al₂O₃ : 0,3%, P₂O₅ : 0,3%, Fe₂O₃: < 0,1%, TiO₂ : < 0,1%, moins de 0,2 % d'autres composés, une taille comprise entre 0,5 et 2 mm et une taille médiane (D₅₀) égale à 0,9 mm,
- un granulat de zircon présentant l'analyse chimique moyenne suivante, en pourcentages massiques: ZrO₂ : 66%, SiO₂ : 33%, Al₂O₃ : 0,3%, P₂O₅ : 0,3%, Fe₂O₃: < 0,1%, TiO₂ : < 0,1%, moins de 0,2 % d'autres composés, une taille comprise entre 0 et 0,5 mm, et une taille médiane (D₅₀) égale à 0,35 mm,
- un sable de zircon présentant l'analyse chimique moyenne suivante en pourcentages massiques : ZrO₂ : 66,8%, SiO₂ : 32,9%, Al₂O₃ : 0,52%, P₂O₅ : 0,08%, Fe₂O₃ : < 0,1%, TiO₂ < 0,1%, moins de 0,2 % d'autres composés et une taille médiane (D₅₀) égale à 170 µm,
- une farine de zircon présentant l'analyse chimique moyenne suivante, en pourcentages massiques : ZrO₂ : 66,4%, SiO₂ : 32,7%, Al₂O₃ : 0,16%, P₂O₅ : 0,12%, Fe₂O₃ : < 0,1%, TiO₂ : 0,10%, et moins de 0,2 % d'autres composés, et une taille médiane (D₅₀) égale à 10,9 µm,
- une poudre de zircon micronisé présentant l'analyse chimique moyenne suivante, en pourcentages massiques : ZrO₂: 63,6%, SiO₂ : 34,1%, Al₂O₃ : 0,94%, P₂O₅ : 0,13%, Fe₂O₃ : 0,06%, TiO₂ : 0,10%, et moins de 0,2 % d'autres composés, et une taille médiane (D₅₀) égale à 1,4 µm,
- de la zircone, commercialisée par la Société Européenne des Produits Réfractaires sous le nom de CC10 dont la taille médiane est égale à 3,5 µm, et présentant une teneur massique en zircone supérieure à 98,5%,
- de la fumée de silice dont la taille médiane est égale à 0,5 µm et présentant une teneur en silice supérieure à 93,5%,
- une poudre de phosphate de magnésium Mg(PO₃)₂, présentant une taille médiane égale 14 µm,
- une poudre de phosphate de fer FePO₄.nH₂O, présentant une taille médiane égale 8 µm, présentant une perte au feu à 1000°C égale à 20%,
- une poudre de phosphate de bore BPO₄, présentant une taille médiane égale 8 µm, une poudre de phosphate de calcium Ca₂P₂O₇, présentant une taille médiane égale 8 µm,
- un ciment d'aluminate(s) de calcium CA25R commercialisé par la société Almatis, présentant une taille médiane (D₅₀) égale à 9 µm,
- une poudre de polyphosphate de sodium,
- un ester de polycarboxylate modifié.

Des blocs de béton fritté ont été fabriqués selon un procédé conforme à l'invention.

A l'étape a), les matières premières ont été dosées et mélangées de manière à former une charge de départ.

A l'étape b), la charge de départ a été placée dans un malaxeur et une quantité d'eau telle que décrite dans le tableau 1 a été ajoutée. Après un malaxage d'une durée de 10 minutes, le béton frais est obtenu.

A l'étape c), le béton frais est coulé sous vibrations (50 Hz, 0,3 mm de double amplitude) dans un moule en bois.

A l'étape d), après la prise, un béton durci est obtenu, et démoulé.

A l'étape e), le béton durci est fritté dans le cycle thermique suivant :
- montée de la température ambiante jusqu'à 1560°C à une vitesse de 100°C/h,
- maintien à 1560°C pendant 6 heures,
- descente en température à une vitesse égale à 100°C/h jusqu'à 500°C, puis descente libre jusqu'à la température ambiante.

Le tableau 1 suivant résume pour chaque exemple, la composition de la charge de départ, la quantité d'eau utilisée à l'étape b) et la possibilité de mettre le béton en place par vibrations.

**Tableau 1**

| | Exemple 1 | Exemple 2 | Exemple 3 | Exemple 4 | Exemple 5 | Exemple 6 | Exemple 7 | Exemple 8 | Exemple 9 | Exemple 10 | Exemple 11 |
|---|---|---|---|---|---|---|---|---|---|---|---|
| Granulat de zircon 0,5-2 mm (%) | 28,85 | 29,15 | 29,05 | 28,65 | 28,7 | 27,4 | 26,9 | 26,1 | 28,3 | 28,3 | 28,3 |
| Granulat de zircon 0-0,5 mm (%) | 10 | 9,8 | 9,7 | 9,6 | 9,95 | 9,5 | 9,3 | 9,05 | 9,8 | 9,8 | 9,8 |
| Sable de Zircon (%) | 24 | 23,3 | 23,3 | 23,1 | 23,9 | 22,8 | 22,35 | 21,7 | 23,5 | 23,5 | 23,5 |
| Farine de zircon(%) | 14 | 13,7 | 13,6 | 13,5 | 13,9 | 13,3 | 13 | 12,65 | 13,7 | 13,7 | 13,7 |
| Zircon Micronisé (%) | 7 | 6,8 | 6,8 | 6,7 | 7 | 6,65 | 6,5 | 6,3 | 6,85 | 6,85 | 6,85 |
| Zircone (%) | 10 | 9,8 | 9,7 | 9,6 | 9,9 | 9,5 | 9,3 | 9,05 | 9,8 | 9,8 | 9,8 |
| Fumée de silice (%) | 3 | 2,9 | 2,9 | 2,9 | 3 | 3 | 3 | 3 | 3 | 3 | 3 |
| Ciment CA25R (%) | 3 | 2,9 | 2,9 | 2,9 | 3 | 3 | 3 | 3 | 3 | 3 | 3 |
| Mg(PO₃)₂ (%) | - | - | 1,9 | 2,9 | 0,5 | 4,7 | 6,5 | 9 | - | - | - |
| FePO₄.nH₂O (%) | - | - | - | - | - | - | - | - | 1,9 | - | - |
| BPO₄ (%) | - | - | - | - | - | - | - | - | - | 1,9 | - |
| Ca₂P₂O₇ (%) | - | - | - | - | - | - | - | - | - | - | 1,9 |
| Polyphosphate de sodium (%) | - | 1,5 | - | - | - | - | - | - | - | - | - |
| Ether de polycarboxylate modifié (%) | 0,15 | 0,15 | 0,15 | 0,15 | 0,15 | 0,15 | 0,15 | 0,15 | 0,15 | 0,15 | 0,15 |
| Eau (%) | 3,7 | 4,1 | 4,1 | 4,3 | 4,3 | 4,3 | 4,3 | 4,3 | 4,3 | 4,3 | 4,3 |
| Possibilité de mise en place du béton frais par vibrations | oui | non | oui | oui | oui | oui | oui | oui | oui | oui | oui |

Le tableau 1 montre que la présence de Mg(PO₃)₂ en des quantités égales à 1,9 % et 2,9% modifie peu le comportement du béton frais qui reste coulable sous vibrations. Au contraire, l'ajout de polyphosphate de sodium ne permet pas le coulage sous vibrations.

Il en est de même pour la présence de Mg(PO₃)₂ en des quantités égales à 0,5%, 4,7%, 6,5% et 9%, ainsi que pour FePO₄ en une quantité égale à 1,9%, BPO₄ en une quantité égale à 1,9%, et Ca₂P₂O₇ en une quantité égale à 1,9%.

La masse volumique apparente et la porosité ouverte des bétons frittés des exemples 1 et 3 à 11 ont été mesurées suivant la norme ISO5017.

Les analyses chimiques ont été réalisées par fluorescence X.

Le comportement au bullage au contact du verre en fusion des bétons frittés des exemples 1 et 3 à 11 a été évalué par la méthode suivante :
Des creusets présentant un diamètre extérieur égal à 50 mm, une hauteur totale égale à 40 mm, un trou concentrique au diamètre extérieur présentant un diamètre égal à 30 mm et un fond d'épaisseur égale à 10 mm sont usinés dans les bétons frittés des exemples à tester.

Chaque creuset est rempli par 30 grammes d'une poudre de verre borosilicate clair dont la taille médiane est égale à 1 mm, dont la taille maximale est égale à 2 mm, et présentant l'analyse chimique massique suivante : SiO₂ : 73%, B₂O₃: 10%, Al₂O₃: 5%, Na₂O+K₂O : 7,5%, autres oxydes : 4,5%.

L'ensemble du creuset et du verre est ensuite placé dans un four électrique et subit le traitement thermique suivant, sous air :
- montée à 1180°C à une vitesse égale à 500°C/h,
- maintien à 1180°C pendant 72 heures,
- descente à 785°C à une vitesse égale à 500°C/h,
- descente à 640°C à une vitesse égale à 20°C/h
- maintien à 640°C pendant 5 heures,
- descente à température ambiante à une vitesse égale à 8°Clh.

Le rapport de la surface des bulles générées lors du test et de la surface de verre observée prise en compte, peut être évalué avec la méthode suivante, non limitative.

Après refroidissement, de la résine est coulée dans le creuset de manière à remplir totalement le creuset. Le creuset est ensuite découpé de manière à obtenir une tranche d'épaisseur égale à 7 mm, ladite tranche contenant l'axe de symétrie vertical du creuset et présentant une hauteur égale à celle du creuset.

La tranche est ensuite polie afin de rendre le verre transparent et faciliter les observations, ledit polissage s'effectuant au minimum avec un papier grade 1200, de préférence avec une pâte diamantée.

Des clichés sont ensuite réalisés à l'aide d'un microscope optique, une source de lumière éclairant le verre à l'opposé de l'observation (rétroéclairage). Ce rétroéclairage fait apparaître les bulles contenues dans le verre. La mise au point, notamment l'ouverture, est effectuée de telle manière que toutes les bulles contenues dans la tranche de verre apparaissent nettes.

Le grossissement utilisé est le grossissement le plus élevé possible permettant l'observation de la totalité de la surface du verre de la tranche, sur une seule image. L'image est ensuite analysée à l'aide du logiciel imageJ, disponible sur le site http://rsbweb.nih.gov/ij/ selon la méthode suivante :
- ouvrir l'image dans imageJ ;
- supprimer les éventuels résultats antérieurs avec la fonction « Analyse>Clear Results » ;
- définir la grandeur à mesurer, autrement dit la surface, en cochant uniquement la case « Area » dans « Analyze>Set measurements », puis en validant par « OK » ;
- ajuster la luminosité avec la fonction « Image>Adjust>Brightness/contrast », puis cliquer sur « Auto » ;
- appliquer un flou gaussien « Gaussian blur » avec un sigma (ou rayon) d'une valeur égale à 2,00 à l'aide de la fonction « Process>Filters>Gaussian blur », puis valider à l'aide du bouton « OK » ;
- Convertir le nombre de niveaux de couleurs/gris en 8 bits avec la fonction « Image>Type>8-bit » ;
- binariser l'image avec la fonction « fonction lmage>Adjust>Treshold>Auto », la case « Dark Background » étant cochée, le menu déroulant correspondant au type de seuillage étant sur « Default », la couleur de seuillage rouge étant sélectionnée à l'aide du menu déroulant sur « Red », ne pas cocher « Stack histogram », appuyer sur « Apply » puis fermer la fenêtre ;
- à l'aide de l'outil « Freehand » sélectionné grâce à l'icône dédiée, définir à l'aide de la souris la zone de verre à analyser, cette zone ne contenant pas les bulles en contact avec les surfaces intérieures du creuset ;
- mesurer la surface de ladite zone, Z_{A}, avec l'outil « Analyse>Measure ». La valeur de la surface s'affiche dans la colonne « Area » d'une fenêtre qui s'ouvre. Noter la valeur et fermer la fenêtre ;
- effacer la partie de l'image se trouvant en dehors de la zone de verre à analyser avec l'outil « Edit>Clear outside », puis désélectionner la zone de verre à analyser précédemment sélectionnée avec l'outil « Edit>Selection>Select None » et effacer les résultats avec l'outil « Analyse>Clear results » ;
- sélectionner à l'intérieur de la zone de verre à analyser, les zones à ne pas prendre en compte, comme par exemple les fissures pouvant apparaître lors du refroidissement du verre. Ces sélections s'effectuent à l'aide de l'outil « Freehand » et son icône dédiée ;
- déterminer la surface Z_{I} de chacune des zones i à ne pas prendre en compte, de manière successive, à l'aide de l'enchaînement de commandes suivant : « Analyse>Measure » puis « Analyse>Clear results » puis « Edit>Clear » puis « Edit>Selection>Select None ». Répéter cet enchaînement i fois. On appelle Z_{B} la somme des surfaces Z_{I} ;
- inverser les zones en noir et en blanc de l'image avec l'outil « Process>Binary>Make Binary ». Les bulles apparaissent alors de couleur noire sur un fond blanc (valeur 255 pour le blanc, 0 pour le noir) ;
- certaines bulles peuvent apparaître sous la forme de cercles non pleins (cercles de couleur blanche avec une partie centrale de couleur noir). Pour ces bulles, transformer la couleur noir de la partie centrale en blanc à l'aide de la fonction « Process>Binary>Fill holes » ;
- déterminer la surface des bulles à l'aide des commandes suivantes « Analyze>Analyze Particles... » en indiquant dans la zone « Size » : « 0-infinity », dans la zone « Circularity » : « 0.00-1.00 », dans la zone « Show » : « Nothing », puis cocher uniquement les cases : « Display results », « Clear results », « In situ Show » et cliquer sur « OK » ;
- enregistrer le fichier de résultats « Results.xls » avec la commande « File>Save As... » ;
- ouvrir le fichier de résultats « Results.xls » et faire la somme Z_{C} de chiffres de la colonne « Area » représentant la surface de chaque bulle de la zone analysée ;
- calculer la surface de verre observée prise en compte, égale à la surface de verre observée Z_{A} diminuée de la surface Z_{B} des zones exclues, Z_{A}-Z_{B} ;
- calculer le rapport de la surface des bulles Z_{C}, et de la surface de verre prise en compte Z_{A}-Z_{B}, Z_{C}/(Z_{A}-Z_{B}).

Ce rapport caractérise le comportement au bullage du béton fritté au contact du verre en fusion utilisé dans le test.

Les figures 1 et 2 représentent les surfaces de verre observées des exemples 1 hors invention, et 3 selon l'invention, respectivement. Les bulles générées par le contact du béton fritté avec le verre en fusion apparaissent en blanc.

Le tableau 2 suivant résume les caractéristiques obtenues après frittage.

**Tableau 2**

| | Exemple 1 | Exemple 3 | Exemple 4 | Exemple 5 | Exemple 6 | Exemple 7 | Exemple 8 | Exemple 9 | Exemple 10 | Exemple 11 |
|---|---|---|---|---|---|---|---|---|---|---|
| ZrO₂ (%) | 65,2 | 64,0 | 63,3 | 64,9 | 62,3 | 61,2 | 59,8 | 62,1 | 62,1 | 62,1 |
| SiO₂ (%) | 29,6 | 29,0 | 28,7 | 29,4 | 28,3 | 27,8 | 27,1 | 28,2 | 28,2 | 28,2 |
| CaO (%) | 0,71 | 0,69 | 0,69 | 0,71 | 0,68 | 0,67 | 0,65 | 0,68 | 0,68 | 2,78 |
| Al₂O₃ (%) | 3,66 | 3,56 | 3,55 | 3,64 | 3,5 | 3,44 | 3,36 | 3,49 | 3,49 | 3,49 |
| MgO (%) | 0,05 | 0,52 | 0,77 | 0,17 | 1,17 | 1,57 | 2,11 | 0,05 | 0,05 | 0,05 |
| P₂O₅ (%) | 0,08 | 1,51 | 2,26 | 0,45 | 3,45 | 4,64 | 6,27 | 2,31 | 3,27 | 2,74 |
| Fe₂O₃ (%) | | | | | | | | 2,52 | 0 | 0 |
| B₂O₃ (%) | | | | | | | | 0 | 1,57 | 0 |
| Autres oxydes (%) | 0,70⁽¹⁾ | 0,72⁽¹⁾ | 0,73⁽¹⁾ | 0,73⁽¹⁾ | 0,6⁽¹⁾ | 0,69⁽¹⁾ | 0,71⁽¹⁾ | 0,66⁽²⁾ | 0,66⁽²⁾ | 0,66⁽²⁾ |
| % de zircon, en % massiques sur la base de la masse des phases cristallisées | 87 | 97 | 98 | 93 | 98 | 98 | 98 | 97 | 97 | 97 |
| Masse volumique apparente (g/cm³) | 3,73 | 3,65 | 3,64 | 3,67 | 3,58 | 3,58 | 3,56 | 3,66 | 3,58 | 3,67 |
| Porosité ouverte (%) | 16,5 | 17,9 | 17,5 | 18,4 | 18,1 | 16,4 | 4,5 | 19 | 19,1 | 17,4 |
| Surface de bulles 1 surface de verre observée prise en compte (%) | 27,9 | 7,1 | 9,4 | 8,7 | 7,6 | 9,5 | 8,3 | 11,8 | 12,1 | 8,1 |

| | | | | | | | | | | |
|---|---|---|---|---|---|---|---|---|---|---|
| (1) : oxydes autres que ZrO₂, SiO₂, MgO, CaO, Al₂O₃ et P₂O₅ (2) : oxydes autres que ZrO₂, SiO₂, MgO, CaO, Al₂O₃, P₂O₅, Fe₂O₃ et B₂O₃. | | | | | | | | | | |

Comme le montrent les résultats indiqués dans le tableau 2, après contact à 1180°C pendant 72 heures avec du verre borosilicate clair, le rapport de la surface de bulles et de la surface de verre observée prise en compte, exprimé en pourcentage, est inférieur pour les bétons des exemples 3 à 11 selon l'invention à celui du béton de l'exemple 1 hors invention.

Le tableau 2 montre en effet que les bétons des exemples 3 et 4 selon l'invention présentent un rapport de la surface de bulles et de la surface de verre observée prise en compte égal à 7,1% et 9,4%, respectivement, très inférieur au rapport de la surface de bulles et de la surface de verre observée prise en compte du béton de l'exemple 1 hors invention, égal à 27,9%.

Il en est de même pour les bétons des exemples 5, 6, 7, 8, 9, 10 et 11 selon l'invention, qui présentent un rapport de la surface de bulles et de la surface de verre observée prise en compte égal à 8,7%, 7,6%, 9,5%, 8,3%, 11,8%, 12,1% et 8,1%, respectivement, très inférieur au rapport de la surface de bulles et de la surface de verre observée prise en compte du béton de l'exemple 1 hors invention, égal à 27,9%.

La quantité de défauts générés dans les articles en verre fabriqués à l'aide des bétons frittés selon l'invention est donc inférieure à celle des articles en verre fabriqués à l'aide du béton fritté de l'exemple 1. Le rendement de fabrication des articles en verre en est donc augmenté.

Le produit de l'exemple 3 est le produit selon l'invention préféré d'entre tous.

Bien entendu, la présente invention n'est pas limitée aux modes de réalisation décrits fournis à titre d'exemples illustratifs et non limitatifs.

En particulier, les bétons selon l'invention ne se limitent pas à des formes ou à des dimensions particulières.

## Revendications

1. Béton fritté ayant la composition chimique moyenne suivante, en pourcentages en masse sur la base des oxydes et pour un total de 100% :
ZrO₂ : 55 à 70%,
SiO₂ : 25 à 40%,
P₂O₅ : 0,2 à 9,0%,
Al₂O₃ : 0,5 à 7,0%,
CaO : > 0,2 %,
CaO + MgO + B₂O₃ + Fe₂O₃ : 0,2 à 10,0%,
MgO + B₂O₃ + Fe₂O₃ : ≤ 7,5%,
B₂O₃ + MgO : ≤ 4,5%,
ZrO₂ + SiO₂ + P₂O₅ + Al₂O₃ + CaO + MgO + B₂O₃ + Fe₂O₃ : ≥ 95,0%,
et présentant plus de 70% de zircon, en pourcentage massique sur la base de la masse des phases cristallisées,
un béton fritté étant un produit qui résulte du frittage d'un béton durci constitué d'un ensemble de grains grossiers présentant une taille comprise entre 150 µm et 25 mm liés par une matrice.

2. Béton fritté selon la revendication précédente, ladite composition étant telle que :
- la teneur en ZrO₂ est supérieure à 57% et inférieure à 67% ; et/ou
- la teneur en SiO₂ est supérieure à 26% et inférieure à 37% ; et/ou
- la teneur en P₂O₅ est supérieure à 0,3% et inférieure à 8,5% ; et/ou
- la somme des teneurs en CaO, MgO, B₂O₃ et Fe₂O₃ est supérieure à 0,3% et inférieure à 9,5% ; et/ou
- la teneur en CaO est supérieure à 0,3% et inférieure à 7,9% ; et/ou
- la somme des teneurs en MgO, B₂O₃ et Fe₂O₃ est inférieure à 7,0% ; et/ou
- la somme des teneurs en MgO et B₂O₃ est inférieure à 4%.

3. Béton fritté selon la revendication précédente, ladite composition étant telle que :
- la teneur en ZrO₂ est supérieure à 58% et inférieure à 65% ; et/ou
- la teneur en SiO₂ est supérieure à 27% et inférieure à 35% ; et/ou
- la teneur en P₂O₅ est supérieure à 0,7% et inférieure à 5,0% ; et/ou
- la somme des teneurs en CaO, MgO, B₂O₃ et Fe₂O₃ est supérieure à 0,5% et inférieure à 5,9% ; et/ou
- la teneur en CaO est supérieure à 0,4% et inférieure à 5,0% ; et/ou
- la somme des teneurs en MgO, B₂O₃ et Fe₂O₃ est inférieure à 3,5% ; et/ou
- la somme des teneurs en MgO et B₂O₃ est inférieure à 2,4%.

4. Béton fritté selon l'une quelconque des revendications précédentes, dans lequel la teneur en zircon, en pourcentage massique sur la base des phases cristallisées, est supérieure à 80%.

5. Béton fritté selon l'une quelconque des revendications précédentes, ayant la composition chimique moyenne suivante, en pourcentages en masse sur la base des oxydes et pour un total de 100% :
ZrO₂ : 55 à 70%,
SiO₂ : 25 à 40%,
CaO : 0,2 à 3,0%,
Al₂O₃ : 0,5 à 7,0%,
MgO : 0,1 à 3,0%,
P₂O₅ : 0,3 à 9,0%,
autres oxydes : < 5,0%.

6. Béton fritté selon la revendication précédente, ladite composition étant telle que :
ZrO₂ > 59%, et/ou
SiO₂ > 27%, et/ou
CaO > 0,4%, et/ou
Al₂O₃ > 1,0%, et/ou
MgO > 0,3%, et/ou
P₂O₅ > 0,7%.

7. Béton fritté selon l'une quelconque des revendications précédentes, ladite composition étant telle que :
ZrO₂ < 67%, et/ou
SiO₂ < 35%, et/ou
CaO < 2,0%, et/ou
Al₂O₃ < 6,0%, et/ou
MgO < 2,1%, et/ou
P₂O₅ < 5,0%, et/ou
autres oxydes < 3,5%.

8. Béton fritté selon la revendication immédiatement précédente, ladite composition étant telle que :
ZrO₂ < 65%, et/ou
SiO₂ < 31%, et/ou
CaO < 1,2%, et/ou
Al₂O₃ < 4,0%, et/ou
MgO < 0,9%, et/ou
P₂O₅ < 3,0%, et/ou
autres oxydes < 2%.

9. Béton fritté selon l'une quelconque des revendications 1 à 4, dans lequel :
- la teneur en P₂O₅ est supérieure à 0,3% et inférieure 5,8%, et
- la teneur en Fe₂O₃ est supérieure à 0,1% et inférieure 6,5%, et
- la teneur en MgO est inférieure à 0,5%, et
- la teneur en B₂O₃ est inférieure à 0,5%, et
- la teneur en CaO est supérieure à 0,3% et inférieure à 3%, et
- la somme des teneurs en MgO et B₂O₃ est inférieure à 1%, et
- la somme des teneurs en CaO, MgO, B₂O₃ et Fe₂O₃ est supérieure à 0,3% et inférieure à 10%, et
- la somme des teneurs en MgO, B₂O₃ et Fe₂O₃ est supérieure à 0,1% et inférieure à 7,0%,
ou dans lequel :
- la teneur en P₂O₅ est supérieure à 0,25% et inférieure 8,3%, et
- la teneur en B₂O₃ est supérieure à 0,05% et inférieure 4,0%, et
- la teneur en MgO est inférieure à 0,5%, et
- la teneur en Fe₂O₃ est inférieure à 0,5%, et
- la teneur en CaO est supérieure à 0,3% et inférieure à 3%, et
- la somme des teneurs en CaO, MgO, B₂O₃ et Fe₂O₃ est supérieure à 0,3% et inférieure à 8,0%, et
- la somme des teneurs en MgO, B₂O₃ et Fe₂O₃ est supérieure à 0,05% et inférieure à 5,0%, et
- la somme des teneurs en MgO et B₂O₃ est supérieure à 0,05% et inférieure à 4,5%,
ou dans lequel :
- la teneur en P₂O₅ est supérieure à 0,25% et inférieure 7,0%, et
- la teneur en CaO est supérieure à 0,3% et inférieure à 8,4%, et
- la teneur en B₂O₃ est inférieure à 0,5%, et
- la teneur en MgO est inférieure à 0,5%, et
- la teneur en Fe₂O₃ est inférieure à 0,5%, et
- la somme des teneurs en CaO, MgO, B₂O₃ et Fe₂O₃ est supérieure à 0,3% et inférieure à 9,5%, et
- la somme des teneurs en MgO, B₂O₃ et Fe₂O₃ est inférieure à 1,5%, et
- la somme des teneurs en MgO et B₂O₃ est inférieure à 1,0%,
ou dans lequel :
- la teneur en P₂O₅ est supérieure à 0,25% et inférieure à 6,5%, et
- la teneur en Al₂O₃ est supérieure à 0,8% et inférieure à 6,5%, et
- la teneur en B₂O₃ est inférieure à 0,5%, et
- la teneur en MgO est inférieure à 0,5%, et
- la teneur en Fe₂O₃ est inférieure à 0,5%, et
- la teneur en CaO est supérieure à 0,3% et inférieure à 3%, et
- la somme des teneurs en CaO, MgO, B₂O₃ et Fe₂O₃ est supérieure à 0,2% et inférieure à 4,5%, et
- la somme des teneurs en MgO, B₂O₃ et Fe₂O₃ est inférieure à 1,5%, et
- la somme des teneurs en MgO et B₂O₃ est inférieure à 1,0%.

10. Procédé de fabrication d'un béton fritté selon l'une quelconque des revendications précédentes, ledit procédé comprenant les étapes successives suivantes :
a) mélange de matières premières particulaires pour former une charge de départ,
b) activation de ladite charge de départ de manière à obtenir un béton frais,
c) mise en forme dudit béton frais,
d) durcissement dudit béton frais de manière à obtenir un béton durci,
e) frittage dudit béton durci de manière à obtenir ledit béton fritté,
la charge de départ étant adaptée de manière que ledit béton fritté soit conforme à l'une quelconque des revendications précédentes,
procédé dans lequel la charge de départ comporte
entre 1,0% et 6,0% en poids d'un liant hydraulique, et
plus de 0,25% d'un phosphate choisi parmi les phosphates de magnésium, les phosphates de fer, les phosphates de bore, les phosphates de calcium, les phosphates d'aluminium et leurs mélanges, ledit phosphate apportant plus de 50% du phosphore de la charge de départ.

11. Procédé selon la revendication immédiatement précédente, dans lequel la charge de départ est telle que, en pourcentages massiques sur la base de la charge de départ,
- la quantité massique de particules de zircon est supérieure à 75% et inférieure à 95%, et/ou
- la quantité massique de particules de zircone libre est supérieure à 1,0% et inférieure à 20,0%, et/ou
- la quantité massique de liant hydraulique dans la charge de départ est supérieure à 1,5% et inférieure à 5,0%, et/ou
- la quantité massique dudit phosphate, de préférence Mg(PO₃)₂, est supérieure à 0,3% et inférieure à 14,0%.

12. Procédé selon la revendication immédiatement précédente, dans lequel la charge de départ est telle que, en pourcentages massiques sur la base de la charge de départ,
- la quantité massique de particules de zircon est inférieure à 90%, et/ou
- la quantité massique de particules de zircone libre est supérieure à 5,0% et inférieure à 15,0%, et/ou
- la quantité massique de liant hydraulique dans la charge de départ est supérieure à 2,0% et inférieure à 4,0%, et/ou
- la quantité massique dudit phosphate, de préférence Mg(PO₃)₂, est supérieure à 1,0% et inférieure à 5,0%, et/ou
- le liant hydraulique est un ciment alumineux.

13. Procédé selon l'une quelconque des trois revendications immédiatement précédentes, dans lequel le seul phosphate présent dans la charge de départ est Mg(PO₃)₂.nH₂O ou FePO₄.nH₂O ou BPO₄.nH₂O ou Ca₂P₂O₇.nH₂O ou AlPO₄.nH₂O, avec n ≥ 0.

14. Unité de production de verre, comportant une pièce en un béton fritté selon l'une quelconque des revendications 1 à 9.

15. Unité de production de verre selon la revendication immédiatement précédente, ladite pièce étant choisie dans le groupe formé par :
- une brique à nez,
- une dalle de sole,
- une pièce de superstructure,
- un bloc canal d'un canal d'alimentation,
- un bloc brûleur,
- un consommable, en particulier une chemise, un plongeur, un agitateur, un rotor, une rondelle d'écoulement, une cuvette d'avant-corps,
- un mandrin utilisé dans une fabrication de tubes en verre selon le procédé Dânner,
- un bloc porte-électrode.

## Patentansprüche

1. Sinterbeton mit der folgenden mittleren chemischen Zusammensetzung in Gewichtsprozent, bezogen auf die Oxide, und für eine Summe von 100 %:
ZrO₂: 55 bis 70 %,
SiO₂: 25 bis 40 %,
P₂O₅: 0,2 bis 9, 0 %,
Al₂O₃: 0,5 bis 7,0 %,
CaO: > 0,2 %,
CaO + MgO + B₂O₃ + Fe₂O₃: 0,2 bis 10,0 %,
MgO + B₂O₃ + Fe₂O₃: ≤ 7,5 %,
B₂O₃ + MgO: ≤ 4,5 %,
ZrO₂ + SiO₂ + P₂O₅ + Al₂O₃ + CaO + MgO + B₂O₃ + Fe₂O₃: ≥ 95,0 %,
und der mehr als 70 % Zirkon in Gewichtsprozent, bezogen auf die Masse der kristallinen Phasen, aufweist,
wobei es sich beim Sinterbeton um ein Produkt handelt, das aus dem Sintern eines Festbetons resultiert, der aus einer Anordnung von durch eine Matrix gebundenen groben Körnern mit einer Größe zwischen 150 µm und 25 mm besteht.

2. Sinterbeton nach dem vorhergehenden Anspruch, wobei die Zusammensetzung derart ist, dass:
- der ZrO₂-Gehalt größer als 57 % und kleiner als 67 % ist und/oder
- der SiO₂-Gehalt größer als 26 % und kleiner als 37 % ist und/oder
- der P₂O₅-Gehalt größer als 0,3 % und kleiner als 8,5 % ist und/oder
- die Summe der Gehalte an CaO, MgO, B₂O₃ und Fe₂O₃ größer als 0,3 % und kleiner als 9,5 % ist und/oder
- der CaO-Gehalt größer als 0,3 % und kleiner als 7,9 % ist und/oder
- die Summe der Gehalte an MgO, B₂O₃ und Fe₂O₃ kleiner als 7,0 % ist und/oder
- die Summe der Gehalte an MgO und B₂O₃ kleiner als 4 % ist.

3. Sinterbeton nach dem vorhergehenden Anspruch, wobei die Zusammensetzung derart ist, dass:
- der ZrO₂-Gehalt größer als 58 % und kleiner als 65 % ist und/oder
- der SiO₂-Gehalt größer als 27 % und kleiner als 35 % ist und/oder
- der P₂O₅-Gehalt größer als 0,7 % und kleiner als 5,0 % ist und/oder
- die Summe der Gehalte an CaO, MgO, B₂O₃ und Fe₂O₃ größer als 0,5 % und kleiner als 5,9 % ist und/oder
- der CaO-Gehalt größer als 0,4 % und kleiner als 5,0 % ist und/oder
- die Summe der Gehalte an MgO, B₂O₃ und Fe₂O₃ kleiner als 3,5 % ist und/oder
- die Summe der Gehalte an MgO und B₂O₃ kleiner als 2,4 %.

4. Sinterbeton nach einem der vorhergehenden Ansprüche, wobei der Zirkongehalt in Gewichtsprozent, bezogen auf die kristallinen Phasen, größer als 80 % ist.

5. Sinterbeton nach einem der vorhergehenden Ansprüche mit der folgenden mittleren chemischen Zusammensetzung in Gewichtsprozent, bezogen auf die Oxide, und für eine Summe von 100 %:
ZrO₂: 55 bis 70 %,
SiO₂: 25 bis 40 %,
CaO: 0,2 bis 3,0 %,
Al₂O₃: 0,5 bis 7,0 %,
MgO: 0,1 bis 3,0 %,
P₂O₅: 0,3 bis 9,0 %,
andere Oxide: < 5,0 %.

6. Sinterbeton nach dem vorhergehenden Anspruch, wobei die Zusammensetzung derart ist, dass:
ZrO₂ > 59 % und/oder
SiO₂ > 27 % und/oder
CaO > 0,4 % und/oder
Al₂O₃ > 1,0 % und/oder
MgO > 0,3 % und/oder
P₂O₅ > 0,7 %.

7. Sinterbeton nach einem der vorhergehenden Ansprüche, wobei die Zusammensetzung derart ist, dass:
ZrO₂ < 67 % und/oder
SiO₂ < 35 % und/oder
CaO < 2,0 % und/oder
Al₂O₃ < 6,0 % und/oder
MgO < 2,1 % und/oder
P₂O₅ < 5,0 % und/oder
andere Oxide < 3,5 %.

8. Sinterbeton nach dem unmittelbar vorhergehenden Anspruch, wobei die Zusammensetzung derart ist, dass:
ZrO₂ < 65 % und/oder
SiO₂ < 31 % und/oder
CaO < 1,2 % und/oder
Al₂O₃ < 4,0 % und/oder
MgO < 0,9 % und/oder
P₂O₅ < 3,0 % und/oder
andere Oxide < 2 %.

9. Sinterbeton nach einem der Ansprüche 1 bis 4, wobei:
- der P₂O₅-Gehalt größer als 0,3 % und kleiner als 5,8 % ist und
- der Fe₂O₃-Gehalt größer als 0,1 % und kleiner als 6,5 % ist und
- der MgO-Gehalt kleiner als 0,5 % ist und
- der B₂O₃-Gehalt kleiner als 0,5 % ist und
- der CaO-Gehalt größer als 0,3 % und kleiner als 3 % ist und
- die Summe der Gehalte an MgO und B₂O₃ kleiner als 1 % ist und
- die Summe der Gehalte an CaO, MgO, B₂O₃ und Fe₂O₃ größer als 0,3 % und kleiner als 10 % ist und
- die Summe der Gehalte an MgO, B₂O₃ und Fe₂O₃ größer als 0,1 % und kleiner als 7,0 % ist,
oder wobei:
- der P₂O₅-Gehalt größer als 0,25 % und kleiner als 8,3 % ist und
- der B₂O₃-Gehalt größer als 0,05 % und kleiner als 4,0 % ist und
- der MgO-Gehalt kleiner als 0,5 % ist und
- der Fe₂O₃-Gehalt kleiner als 0,5 % ist und
- der CaO-Gehalt größer als 0,3 % und kleiner als 3 % ist und
- die Summe der Gehalte an CaO, MgO, B₂O₃ und Fe₂O₃ größer als 0,3 % und kleiner als 8,0 % ist und
- die Summe der Gehalte an MgO, B₂O₃ und Fe₂O₃ größer als 0,05 % und kleiner als 5,0 % ist und
- die Summe der Gehalte an MgO und B₂O₃ größer als 0,05 % und kleiner als 4,5 % ist,
oder wobei:
- der P₂O₅-Gehalt größer als 0,25 % und kleiner als 7,0 % ist und
- der CaO-Gehalt größer als 0,3 % und kleiner als 8,4 % ist und
- der B₂O₃-Gehalt kleiner als 0,5 % ist und
- der MgO-Gehalt kleiner als 0,5 % ist und
- der Fe₂O₃-Gehalt kleiner als 0,5 % ist und
- die Summe der Gehalte an CaO, MgO, B₂O₃ und Fe₂O₃ größer als 0,3 % und kleiner als 9,5 % ist und
- die Summe der Gehalte an MgO, B₂O₃ und Fe₂O₃ kleiner als 1,5 % ist und
- die Summe der Gehalte an MgO und B₂O₃ kleiner als 1,0 % ist,
oder wobei:
- der P₂O₅-Gehalt größer als 0,25 % und kleiner als 6,5 % ist und
- der Al₂O₃-Gehalt größer als 0,8 % und kleiner als 6,5 % ist und
- der B₂O₃-Gehalt kleiner als 0,5 % ist und
- der MgO-Gehalt kleiner als 0,5 % ist und
- der Fe₂O₃-Gehalt kleiner als 0,5 % ist und
- der CaO-Gehalt größer als 0,3 % und kleiner als 3 % ist und
- die Summe der Gehalte an CaO, MgO, B₂O₃ und Fe₂O₃ größer als 0,2 % und kleiner als 4,5 % ist und
- die Summe der Gehalte an MgO, B₂O₃ und Fe₂O₃ kleiner als 1,5 % ist und
- die Summe der Gehalte an MgO und B₂O₃ kleiner als 1,0 % ist.

10. Verfahren zur Herstellung eines Sinterbetons nach einem der vorhergehenden Ansprüche, wobei das Verfahren zumindest die folgenden aufeinanderfolgenden Schritte umfasst:
a) das Vermischen von partikelförmigen Rohstoffen, um ein Einsatzmaterial zu bilden,
b) das Aktivieren des Einsatzmaterials, um einen Frischbeton zu erhalten,
c) das Formen des Frischbetons,
d) das Härten des Frischbetons, um einen Festbeton zu erhalten,
e) das Sintern des Festbetons, um den Sinterbeton zu erhalten,
wobei das Einsatzmaterial so ausgelegt ist, dass der Sinterbeton einem der vorhergehenden Ansprüche entspricht,
wobei das Einsatzmaterial Folgendes umfasst:
zwischen 1,0 Gew.-% und 6,0 Gew.-% eines hydraulischen Bindemittels und
mehr als 0,25 % eines Phosphats, das aus Magnesiumphosphaten, Eisenphosphaten, Borphosphaten, Calciumphosphaten, Aluminiumphosphaten und deren Mischungen ausgewählt ist, wobei das Phosphat mehr als 50 % des Phosphors des Einsatzmaterials liefert.

11. Verfahren nach dem unmittelbar vorhergehenden Anspruch, wobei das Einsatzmaterial derart ist, dass in Gewichtsprozent, bezogen auf das Einsatzmaterial,
- die Gewichtsmenge der Zirkonpartikel größer als 75 % und kleiner als 95 % ist und/oder
- die Gewichtsmenge der freien Zirkonpartikel größer als 1,0 % und kleiner als 20,0 % ist und/oder
- die Gewichtsmenge des hydraulischen Bindemittels im Einsatzmaterial größer als 1,5 % und kleiner als 5,0 % ist und/oder
- die Gewichtsmenge des Phosphats, vorzugsweise Mg(PO₃)₂, größer als 0,3 % und kleiner als 14,0 % ist.

12. Verfahren nach dem unmittelbar vorhergehenden Anspruch, wobei das Einsatzmaterial derart ist, dass in Gewichtsprozent, bezogen auf das Einsatzmaterial,
- die Gewichtsmenge der Zirkonpartikel kleiner als 90 % ist und/oder
- die Gewichtsmenge der freien Zirkonpartikel größer als 5,0 % und kleiner als 15,0 % ist und/oder
- die Gewichtsmenge des hydraulischen Bindemittels im Einsatzmaterial größer als 2,0 % und kleiner als 4,0 % ist und/oder
- die Gewichtsmenge des Phosphats, vorzugsweise Mg(PO₃)₂, größer als 1,0 % und kleiner als 5,0 % ist, und/oder
- das hydraulische Bindemittel ein Aluminiumzement ist.

13. Verfahren nach einem der drei unmittelbar vorhergehenden Ansprüche, wobei das einzige im Einsatzmaterial vorhandene Phosphat Mg(PO₃)₂.n H₂O oder FePO₄.n H₂O oder BPO₄.n H₂O oder Ca₂P₂O₇.n H₂O oder AlPO₄.n H₂O, mit n ≥ 0, ist.

14. Glasherstellungsanlage, die ein Teil aus einem Sinterbeton nach einem der Ansprüche 1 bis 9 umfasst.

15. Glasherstellungsanlage nach dem unmittelbar vorhergehenden Anspruch, wobei das Teil ausgewählt ist aus der Gruppe bestehend aus:
- einem Nasenstein,
- einer Bodenplatte,
- einem Teil eines Aufbaus,
- einem Kanalblock eines Zufuhrkanals,
- einem Brennerblock,
- einem Verbrauchsmaterial, insbesondere einer Auskleidung, einem Plunger, einem Rührer, einem Rotor, einer Strömungsscheibe, einem Speiserbecken,
- einer Drehspindel, die bei einer Herstellung von Glasröhren gemäß dem Danner-Verfahren verwendet wird,
- einem Elektrodenhalterblock.

## Claims

1. Sintered concrete having the following mean chemical composition, in mass percentages on the basis of the oxides and for a total of 100%:
ZrO₂: 55% to 70%
SiO₂: 25% to 40%
P₂O₅: 0.2% to 9.0%
Al₂O₃: 0.5% to 7.0%
CaO: > 0.2%
CaO + MgO + B₂O₃ + Fe₂O₃: 0.2% to 10.0% MgO + B₂O₃ + Fe₂O₃: ≤ 7.5%
B₂O₃ + MgO: ≤ 4.5%
ZrO₂ + SiO₂ + P₂O₅ + Al₂O₃ + CaO + MgO + B₂O₃ + Fe₂O₃: ≥ 95.0%
and containing more than 70% of zirconia, as a mass percentage on the basis of the mass of the crystalline phases,
a sintered concrete being a product which results from the sintering of a hardened concrete consisting of an assembly of coarse grains between 150 µm and 25 mm in size bound together by a matrix.

2. Sintered concrete according to the preceding claim, said composition being such that:
- the ZrO₂ content is greater than 57% and less than 67%; and/or
- the SiO₂ content is greater than 26% and less than 37%; and/or
- the P₂O₅ content is greater than 0.3% and less than 8.5%; and/or
- the sum of the contents of CaO, MgO, B₂O₃ and Fe₂O₃ is greater than 0.3% and less than 9.5%; and/or
- the CaO content is greater than 0.3% and less than 7.9%; and/or
- the sum of the contents of MgO, B₂O₃ and Fe₂O₃ is less than 7.0%; and/or
- the sum of the contents of MgO and B₂O₃ is less than 4%.

3. Sintered concrete according to the preceding claim, said composition being such that:
- the ZrO₂ content is greater than 58% and less than 65%; and/or
- the SiO₂ content is greater than 27% and less than 35%; and/or
- the P₂O₅ content is greater than 0.7% and less than 5.0%; and/or
- the sum of the contents of CaO, MgO, B₂O₃ and Fe₂O₃ is greater than 0.5% and less than 5.9%; and/or
- the CaO content is greater than 0.4% and less than 5.0%; and/or
- the sum of the contents of MgO, B₂O₃ and Fe₂O₃ is less than 3.5%; and/or
- the sum of the contents of MgO and B₂O₃ is less than 2.4%.

4. Sintered concrete according to any one of the preceding claims, in which the zirconia content, as a mass percentage on the basis of the crystalline phases, is greater than 80%.

5. Sintered concrete according to any one of the preceding claims, having the following mean chemical composition, as mass percentages on the basis of the oxides and for a total of 100%:
ZrO₂: 55% to 70%
SiO₂: 25% to 40%
CaO: 0.2% to 3.0%
Al₂O₃: 0.5% to 7.0%
MgO: 0.1% to 3.0%
P₂O₅: 0.3% to 9.0%
other oxides: <5.0%.

6. Sintered concrete according to the preceding claim, said composition being such that:
ZrO₂ > 59%, and/or
SiO₂ > 27%, and/or
CaO > 0.4%, and/or
Al₂O₃ > 1.0%, and/or
MgO > 0.3%, and/or
P₂O₅ > 0.7%.

7. Sintered concrete according to any one of the preceding claims, said composition being such that:
ZrO₂ < 67%, and/or
SiO₂ < 35%, and/or
CaO < 2.0%, and/or
Al₂O₃ < 6.0%, and/or
MgO < 2.1%, and/or
P₂O₅ < 5.0%, and/or
other oxides < 3.5%.

8. Sintered concrete according to the immediately preceding claim, said composition being such that:
ZrO₂ < 65%, and/or
SiO₂ < 31%, and/or
CaO < 1.2%, and/or
Al₂O₃ < 4.0%, and/or
MgO < 0.9%, and/or
P₂O₅ < 3.0%, and/or
other oxides < 2%.

9. Sintered concrete according to any one of Claims 1 to 4, in which:
- the P₂O₅ content is greater than 0.3% and less than 5.8%; and
- the Fe₂O₃ content is greater than 0.1% and less than 6.5%; and
- the MgO content is less than 0.5%; and
- the B₂O₃ content is less than 0.5%; and
- the CaO content is greater than 0.3% and less than 3 %; and
- the sum of the contents of MgO and B₂O₃ is less than 1%; and
- the sum of the contents of CaO, MgO, B₂O₃ and Fe₂O₃ is greater than 0.3% and less than 10%; and
- the sum of the contents of MgO, B₂O₃ and Fe₂O₃ is greater than 0.1% and less than 7.0%,
or in which:
- the P₂O₅ content is greater than 0.25% and less than 8.3%; and
- the B₂O₃ content is greater than 0.05% and less than 4.0%; and
- the MgO content is less than 0.5%; and
- the Fe₂O₃ content is less than 0.5%; and
- the CaO content is greater than 0.3% and less than 3 %; and
- the sum of the contents of CaO, MgO, B₂O₃ and Fe₂O₃ is greater than 0.3% and less than 8.0%; and
- the sum of the contents of MgO, B₂O₃ and Fe₂O₃ is greater than 0.05% and less than 5.0%; and
- the sum of the contents of MgO and B₂O₃ is greater than 0.05% and less than 4.5%;
or in which:
- the P₂O₅ content is greater than 0.25% and less than 7.0%; and
- the CaO content is greater than 0.3% and less than 8.4%; and
- the B₂O₃ content is less than 0.5%; and
- the MgO content is less than 0.5%; and
- the Fe₂O₃ content is less than 0.5%; and
- the sum of the contents of CaO, MgO, B₂O₃ and Fe₂O₃ is greater than 0.3% and less than 9.5%; and
- the sum of the contents of MgO, B₂O₃ and Fe₂O₃ is less than 1.5%; and
- the sum of the contents of MgO and B₂O₃ is less than 1.0%;
or in which:
- the P₂O₅ content is greater than 0.25% and less than 6.5%; and
- the Al₂O₃ content is greater than 0.8% and less than 6.5%; and
- the B₂O₃ content is less than 0.5%; and
- the MgO content is less than 0.5%; and
- the Fe₂O₃ content is less than 0.5%; and
- the CaO content is greater than 0.3% and less than 3 %; and
- the sum of the contents of CaO, MgO, B₂O₃ and Fe₂O₃ is greater than 0.2% and less than 4.5%; and
- the sum of the contents of MgO, B₂O₃ and Fe₂O₃ is less than 1.5%; and
- the sum of the contents of MgO and B₂O₃ is less than 1.0%.

10. Process for manufacturing a sintered concrete according to any one of the preceding claims, said process comprising the following successive steps:
a) mixing particulate starting materials to form a starting feedstock,
b) activating said starting feedstock so as to obtain a fresh concrete,
c) forming said fresh concrete,
d) hardening said fresh concrete so as to obtain a hardened concrete,
e) sintering said hardened concrete so as to obtain said sintered concrete,
the starting feedstock being adapted so that said sintered concrete is in accordance with any one of the preceding claims,
in which process the starting feedstock includes
between 1.0% and 6.0% by weight of a hydraulic binder, and
more than 0.25% of a phosphate chosen from magnesium phosphates, iron phosphates, boron phosphates, calcium phosphates, aluminium phosphates and mixtures thereof, said phosphate providing more than 50% of the phosphorus of the starting feedstock.

11. Process according to the immediately preceding claim, in which the starting feedstock is such that, as mass percentages on the basis of the starting feedstock:
- the mass amount of zirconia particles is greater than 75% and less than 95%, and/or
- the mass amount of free zirconia particles is greater than 1.0% and less than 20.0%, and/or
- the mass amount of hydraulic binder the starting feedstock is greater than 1.5% and less than 5.0%, and/or
- the mass amount of said phosphate, preferably Mg(PO₃)₂, is greater than 0.3% and less than 14.0%.

12. Process according to the immediately preceding claim, in which the starting feedstock is such that, as mass percentages on the basis of the starting feedstock:
- the mass amount of zirconia particles is less than 90%, and/or
- the mass amount of free zirconia particles is greater than 5.0% and less than 15.0%, and/or
- the mass amount of hydraulic binder in the starting feedstock is greater than 2.0% and less than 4.0%, and/or
- the mass amount of said phosphate, preferably Mg(PO₃)₂, is greater than 1.0% and less than 5.0%, and/or
- the hydraulic binder is an aluminous cement.

13. Process according to any one of the three immediately preceding claims, in which the only phosphate present in the starting feedstock is Mg(PO₃)₂ ·nH₂O or FePO₄ ·nH₂O or BPO₄ ·nH₂O or Ca₂P₂O₇ ·nH₂O or AlPO₄·nH₂O, with n ≥ 0.

14. Glass production unit, including a component made of a sintered concrete according to any one of Claims 1 to 9.

15. Glass production unit according to the immediately preceding claim, said component being chosen from the group formed by:
- a plate block,
- a paving slab,
- a superstructure component,
- a channel block of a feed channel,
- a burner block,
- a consumable, in particular a jacket, a plunger, a stirrer, a rotor, a bushing or a feeder nose,
- a mandrel used in the manufacture of glass tubes via the Danner process,
- an electrode holder block.
